# EUROPÄISCHE PATENTANMELDUNG

(11) **EP 4 303 066 A1**
(43) Veröffentlichungstag der Anmeldung: **10.01.2024**
(21) Anmeldenummer: 22183507.7
(22) Anmeldetag: 07.07.2022
(51) Int. Cl.: B60L 53/14, B60L 53/53, B60L 53/57, H01M 50/247, H02J 7/34, H02J 3/14

(54) **VERSORGUNGSSYSTEM, VERFAHREN ZUR HERSTELLUNG EINES VERSORGUNGSSYSTEMS, VERFAHREN ZUM LADEN EINES FAHRZEUGS UND VERFAHREN ZUM ZWISCHENSPEICHERN VON ENERGIE**

(71) Anmelder: eSpectrum AG, 8280 Kreuzlingen (CH)
(72) Erfinder: Ackermann, Roger, 8595 Altnau (CH)
(74) Vertreter: Hepp Wenger Ryffel AG

(57) **Zusammenfassung**

Die Erfindung betrifft ein Versorgungssystem (10) für elektrisch betriebene Fahrzeuge. Das Versorgungssystem (10) umfasst eine Energiespeichervorrichtung (8), eine Steuereinheit (11), eine Wandlungsvorrichtung sowie eine Ladestation (9a, 9b). Die Ladestation (9a, 9b) ist durch die Energiespeichervorrichtung (8) und über die Wandlungsvorrichtung mit Energie versorgbar.

## Beschreibung

Die Erfindung betrifft ein Versorgungssystem, ein Verfahren zum Herstellen eines Versorgungssystems, ein Verfahren zum Laden eines Fahrzeugs und ein Verfahren zum Zwischenspeichern von Energie.

Um den Klimawandel zu beeinflussen und unabhängig von fossilen Brennstoffen zu werden, wird immer mehr auf elektrisch betriebene Fahrzeuge gesetzt. Die dafür benötigte Energie wird aus erneuerbaren Energiequellen geholt. Dies führt zu Herausforderung auf der Energieerzeugerseite, da die Erzeugung häufig zeitversetzt zum Verbrauch steht. Gleichzeitig wird von der Verbraucherseite auch hohe Mobilität beim Zugang zu Energie gefordert.

Heutige Ladestationen sind oft ortsgebunden und können die Energieerzeugung nicht optimal ausnutzen und ergänzen.

Es ist daher Aufgabe der Erfindung, die Nachteile des Standes der Technik zu beheben und ein Versorgungssystem für elektrisch betriebene Fahrzeuge bereitzustellen, welches vielseitig, ort- und zeitunabhängig einsetzbar ist und die Energieerzeugung optimal ergänzt.

Diese Aufgabe wird gelöst durch ein Versorgungssystem für elektrisch betriebene Fahrzeuge, ein Verfahren zur Herstellung eines Versorgungssystems, ein Ladeverfahren und ein Verfahren zum Zwischenspeichern von Energie gemäss den unabhängigen Ansprüchen.

Insbesondere werden die Aufgaben gelöst durch ein Versorgungssystem für elektrisch betriebene Fahrzeuge. Das Versorgungssystem umfasst eine Energiespeichervorrichtung, eine Steuereinheit, eine Wandlungsvorrichtung sowie eine Ladestation. Die Ladestation ist durch die Energiespeichervorrichtung und über die Wandlungsvorrichtung mit Energie versorgbar.

Ein solches Versorgungssystem kann einfach und rasch elektrisch betriebene Fahrzeuge aufladen.

Unter elektrisch betriebenen Fahrzeugen sind hier LKWs, PKWs und ähnliche Fahrzeuge zu verstehen. Die elektrisch betriebenen Fahrzeuge können auch Baufahrzeuge sowie Omnibusse sein. Es ist auch möglich, dass das Versorgungssystem Baumaschinen auflädt.

Das Versorgungssystem kann dazu ausgebildet sein, elektrisch betriebene Fahrzeuge, insbesondere deren Energiespeicher, aufzuladen. Insbesondere umfasst das Versorgungssystem Kabel und/oder Stecker zum Verbinden des Versorgungssystems mit elektrisch betriebenen Fahrzeugen und/oder mit einem Stromnetzwerk.

Das Versorgungssystem kann dazu ausgebildet sein, am Regelenergiemarkt teilzunehmen. Insbesondere kann das Versorgungssystem dazu ausgebildet sein, Primär- und/oder Sekundärregelenergie aufzunehmen, abzugeben und vorzuhalten.

Das Versorgungssystem kann dazu ausgebildet sein, mit einer Steuerungszentrale zu kommunizieren. Insbesondere kann das Versorgungssystem mindestens ein WLAN-Modul und/oder andere Arten von Kommunikationsgeräten umfassen. Es ist auch möglich, dass das Versorgungssystem über einen LAN-Anschluss und/oder ein GSM-Modul (Mobilfunk) verfügt. Insbesondere kann das Versorgungssystem ausgebildet sein, von einer Steuerungszentrale überwacht und/oder gesteuert zu werden. Das Versorgungssystem kann dazu ausgebildet sein, den Energieverbrauch eines Stromnetzes zu erhöhen und/oder Energie in ein Stromnetz einzuleiten, bevorzugt auf Befehl einer Steuerzentrale. Bevorzugt kann das Versorgungssystem dazu ausgebildet sein, die Energiespeichervorrichtung zu laden und/oder entladen basierend auf Befehlen einer Steuerzentrale und/oder Messungen von Energieproduktion und -verbrauch. Insbesondere kann das Versorgungssystem dazu ausgebildet sein, basierend auf Lastmessungen Energie in ein Stromnetz einzuspeisen und/oder Energie aus einem Stromnetz zu beziehen, bevorzugt durch Aufladen und/oder Entladen der Energiespeichervorrichtung.

Das Versorgungssystem kann dazu ausgelegt sein, Lastspitzen in einem Stromnetzwerk zu kappen.

Es ist möglich, dass das Versorgungssystem von einer Steuerzentrale derart eingesetzt wird, dass Lastspitzen in einem Stromnetzwerk abgeflacht werden. Wenn in dem Stromnetzwerk, beispielsweise durch eine hohe Stromproduktion bei viel Sonne (Solarenergie) und/oder Wind (Windkraft) überschüssiger Strom vorhanden ist, kann das Versorgungssystem von der Steuerzentrale zugeschaltet werden. Das Versorgungssystem kann dann einen entsprechenden Ladestrom zu einem Fahrzeug fliessen lassen oder bei einem bereits stattfindenden Ladevorgang den Ladestrom erhöhen. Ausserdem kann das Versorgungssystem bei einem Stromüberschuss in dem Stromnetzwerk die Energiespeichervorrichtung laden und so zur Abflachung von Stromspitzen beitragen. Wenn in dem Stromnetz zu einem späteren Zeitpunkt ein Strommangel auftritt, kann das Versorgungssystem von der Steuerzentrale so eingesetzt werden, dass das Versorgungssystem Strom von der Energiespeichervorrichtung in das Stromnetzwerk einspeist.

Das Stromnetzwerk kann eine Nennspannung von 400V AC (Wechselstrom) und/oder eine Nennfrequenz von 50Hz aufweisen.

Das Versorgungssystem kann mittels CEE-Steckern an das Stromnetzwerk angeschlossen sein. Die CEE-Stecker können eine IEC-Stromstärke von 16 A, 32 A, 63 A oder 125 A aufweisen. Es ist auch möglich, dass das Versorgungssystem mittels eines Powerlockanschlusses mit dem Stromnetzwerk verbunden ist. Der Powerlockanschluss kann für bis zu 2400 A ausgelegt sein. Es ist auch möglich, dass das Versorgungssystem über einen Festanschluss und/oder über Sammelanschlüsse an das Stromnetzwerk angeschlossen ist und die Anschlüsse für bis zu 3200 A ausgelegt sind.

Vorzugsweise umfasst die Energiespeichervorrichtung mindestens zwei Batteriemodule. Dabei kann es sich um handelsübliche Batteriemodule handeln. Die Batteriemodule können so ausgebildet sein, dass die elektrische Ladung im Wesentlichen gleichmässig in den Batteriezellen verteilt ist.

Dies erlaubt eine Optimierung der Speicherung von Energie.

Vorzugsweise umfasst die Wandlungsvorrichtung einen Wechselrichter zum Umwandeln von DC-Strom aus der Energiespeichervorrichtung in AC-Strom zur Versorgung der Ladestation.

Das erlaubt eine einfache Versorgung der Ladestation.

Vorzugsweise sind die Energiespeichervorrichtung, die Steuerungseinrichtung, die Wandlungsvorrichtung und die Ladestation in einem Container mit 2.44m Breite angeordnet, insbesondere in einem High Cube Container mit einer Höhe vom 2.9 m.

Dieses Versorgungssystem ist einfach zu transportieren. Der Container kann, beispielsweise an den oberen und/oder unteren Ecken, Ösen oder andere Anschlagelemente umfassen, an die ein Anschlagmittel eines Krans oder ein Anschlagmittel einer anderen Hebevorrichtung angeschlagen werden kann. Es ist auch möglich, dass der Container Aufnahmen für die Gabel eines Gabelstaplers umfasst. Bei dem Transport des Versorgungssystems kann das Versorgungssystem mit einer oder mehreren Messeinheiten ausgestattet werden. Die Messeinheit kann beispielsweise die Temperatur, die Feuchtigkeit oder das Vorliegen bzw. die Stärke von Erschütterungen messen.

Vorzugsweise sind die Energiespeichervorrichtung und/oder die Steuereinheit und/oder die Wandlungsvorrichtung in einem Technikabteil angeordnet.

Vorzugsweise umfasst das Technikabteil ein Energiespeicherabteil und ein Steuerungsabteil. Die Energiespeichervorrichtung ist im Energiespeicherabteil angeordnet. Die Steuereinheit sowie die Wandlungsvorrichtung sind im Steuerungsabteil angeordnet. Das Steuerungsabteil und das Energiespeicherabteil sind insbesondere jeweils durch eine Tür zugänglich.

So kann die Sicherheit des Versorgungssystems einfach erhöht werden.

Im Energiespeicherabteil können Befestigungsvorrichtungen zum Befestigen der Batteriemodule angeordnet sein, insbesondere derart, dass die Befestigungsvorrichtungen transportsicher mit einer Wand und/oder dem Boden des Energiespeicherabteils verbunden sind.

Die mindestens zwei Batteriemodule können an einer Befestigungsvorrichtung befestigt sein, insbesondere derart, dass ein sicherer Transport des Versorgungssystems ermöglicht ist.

Vorzugsweise umfasst das Versorgungssystem eine Netzanschlussvorrichtung, insbesondere ist durch die Wandlungsvorrichtung AC-Strom aus dem Netz in DC-Strom umwandelbar.

Das erlaubt ein einfaches Aufladen der Energiespeichervorrichtung.

Die Wandlungsvorrichtung kann dazu ausgebildet sein, den DC-Strom aus der Energiespeichervorrichtung in AC-Strom zur Einspeisung in ein Stromnetzwerk umzuwandeln.

Vorzugsweise ist die Ladestation bevorzugt nur von einem Boden, einem Dach und einer Seitenwand umgeben und ist insbesondere in einem Endbereich des Containers angeordnet.

Vorzugsweise sind mindestens zwei, insbesondere vier Ladestationen ausgebildet. Die vier Ladestationen sind jeweils in Gruppen von zwei Ladestationen an gegenüberliegenden Enden des Versorgungssystems angeordnet, insbesondere an gegenüberliegenden Enden beidseitig des Technikabteils.

Das erlaubt einen einfachen Zugang zum Laden von elektrischen Fahrzeugen.

Die Aufgabe wird weiter durch ein Verfahren zur Herstellung eines Versorgungssystems gelöst. Ein Container, insbesondere mit 2.44m Breite, bevorzugt ein High Cube Container, wird mit einer Energiespeichervorrichtung, einer Steuereinheit, einer Wandlungsvorrichtung und einer Ladestation für Fahrzeuge ausgestattet wird.

Die Aufgabe wird weiterhin durch ein Verfahren zum Laden eines Fahrzeuges mit einem Versorgungssystem wie vorhergehend beschrieben, gelöst. Bei diesem Verfahren wird elektrische Energie aus einer Energiespeichervorrichtung durch eine Wandlungsvorrichtung in AC-Strom umgewandelt und an eine Ladestation geleitet. Die Ladestation wird lösbar mit einem Fahrzeug verbunden und eine Batterie des Fahrzeuges wird aufgeladen.

Insbesondere wird die Ladestation zusätzlich mit Strom aus einem Stromnetzwerk gespeist.

Vorzugsweise wird der Ladevorgang durch eine Steuereinheit gesteuert.

Die Steuereinheit kann dazu ausgebildet sein, Anteile von Energie aus der Energiespeichervorrichtung durch Energie aus einem Stromnetz zu ergänzen und/oder ersetzen. Die Steuereinheit kann dazu ausgebildet sein, den Ladevorgang zu unterbrechen, zu beschleunigen und/oder zu drosseln.

Vorzugsweise wird die Energiespeichervorrichtung des Versorgungssystems während des Ladevorgangs des Fahrzeuges nicht aufgeladen. Es ist auch möglich, dass die Energiespeichervorrichtung des Versorgungssystems und das Fahrzeug bzw. die Fahrzeuge gleichzeitig aufgeladen werden.

Weiter werden die Aufgaben durch ein Verfahren, insbesondere ein computerimplementiertes Verfahren, zum Zwischenspeichern von Energie in einem Versorgungssystem wie vorhergehend beschrieben gelöst. Energie wird über die Netzanschlussvorrichtung über die Wandlungsvorrichtung in die Energiespeichervorrichtung eingeleitet, insbesondere auf Anordnung einer Steuerzentrale eines Stromnetzwerks.

Die Lasten eines Stromnetzwerkes können durch eine Messvorrichtung des Stromnetzwerks gemessen werden. Gemessen werden können die Daten beispielsweise am Netzanschluss eines Werksgeländes des Betreibers des Versorgungssystems. Es ist möglich, dass für die Messung ein oder mehrere zusätzliche Messgeräte in das Verfahren eingebunden werden. Das oder die Messgeräte können in ein übergeordnetes Management-System eingebunden sein. Die gemessenen Daten können an eine Steuerzentrale und/oder an ein oder mehrere Versorgungssysteme gesendet werden. Falls das Stromnetz überschüssigen elektrischen Strom aufweist, kann die Steuerzentrale den Befehl zum Aufladen der Energiespeichereinheit an die Steuereinheit des Versorgungssystems senden. Das Versorgungssystem kann den Befehl ausführen und die Energiespeichereinheit aufladen. Die Steuereinheit kann die Wandlungsvorrichtung zum Aufladen der Energiespeichervorrichtung ansteuern. Die Energie kann über die Netzanschlussvorrichtung über die Wandlungsvorrichtung in die Energiespeichervorrichtung eingeleitet werden.

Falls das Stromnetzwerk zusätzlichen elektrischen Strom benötigt, ist es möglich, dass die Steuerzentrale den Befehl zum Einspeisen von elektrischem Strom in das Stromnetzwerk an das Versorgungssystem sendet. Das Versorgungssystem kann den Befehl ausführen und elektrischen Strom von der Energiespeichervorrichtung in das Stromnetzwerk einspeisen. Die Steuereinheit des Versorgungssystems kann die Wandlungsvorrichtung zum Einspeisen des elektrischen Stroms ansteuern. Der elektrische Strom kann über die Wandlungsvorrichtung und die Netzanschlussvorrichtung in das Stromnetzwerk eingespeist werden. Es ist möglich, dass eine gewünschte Last für das Stromnetzwerk von der Steuerzentrale vorgegeben wird. Es ist auch möglich, dass für unterschiedliche Zeiträume verschiedene gewünschte Lasten vorgegeben werden. Das Versorgungssystem kann auch zeitabhängig bevorzugt Strom speichern, beispielsweise wenn der Strom zu einem besonders günstigen Tarif verfügbar ist. Es kann ausgeschlossen sein, dass der Speicher bei Niedertarif geladen wird und bei Hochtarif die gespeicherte elektrische Energie in das Stromnetzwerk gespeist wird. Allerdings ist es möglich, dass der Speicher bei Niedertarif geladen wird und die gespeicherte elektrische Energie für das Laden von Fahrzeugen verwendet wird. Die Energie kann alternativ auch in einem lokalen Stromnetz verwendet werden, welches unabhängig von der Netzversorgung ist.

Es ist möglich, dass das Versorgungssystem an die Steuerzentrale den Füllstand der Energiespeichervorrichtung sendet. Dann kann die Steuerzentrale anhand dieses Datums die Energiespeichervorrichtungen einsetzen. Es ist auch möglich, dass in dem System vorgegeben ist, dass in einem bestimmten Zeitintervall kein Strom in das Stromnetzwerk eingespeist werden darf. Es ist möglich, dass das Versorgungssystem lediglich als Speicher für das Laden von Fahrzeugen verwendet wird. In diesem Fall speist das Versorgungssystem keinen Strom in das Stromnetzwerk ein. Das Versorgungssystem kann so eingestellt werden, dass bei der Einspeisung von Strom in das Stromnetzwerk ein bestimmter Ladestand der Energiespeichervorrichtung nicht unterschritten wird.

Ein solches Verfahren erlaubt es, asynchron produzierte Energie einfach zwischenzuspeichern.

Vorzugsweise wird Energie über die Wandlungsvorrichtung und die Netzanschlussvorrichtung in das Stromnetz eingespeist, insbesondere auf Anordnung der Steuerzentrale des Stromnetzwerks.

Das erlaubt einen einfachen Lastausgleich in einem Stromnetz.

Vorzugsweise überwacht die Steuerzentrale die Belastung des Stromnetzwerks und die Einspeisung von Energie in das Stromnetzwerk und auf Grund dieser Überwachung Befehle an die Steuereinheit des mindestens einen Versorgungssystems sendet, insbesondere gibt die Steuerzentrale den Befehl, Energie zu speichern bei geringer Last und Energie in das Stromnetz zu speisen bei hoher Last.

So kann das Versorgungssystem einfach in eine Energieversorgung integriert werden.

Vorzugsweise steuert die Steuereinheit das Speichern der Energie und das Einspeisen der Energie.

Dies erlaubt es, die Energiespeicherung und Einspeisung, sowie das Aufladen der elektrisch betriebenen Fahrzeuge einfach zu überwachen und zu steuern. Dies funktioniert auch bei Ausfall der Kommunikation mit der Steuerungszentrale.

Vorzugsweise überwacht die Steuereinheit des Versorgungssystems den Ladezustand der Batterien. Insbesondere führt die Steuereinheit Befehle der Steuerzentrale nur durch, falls der Ladezustand der Batterien dies zulässt.

Dazu kann der Ladestand der Batterien überwacht und mittels einer Messeinrichtung gemessen werden. An dem Versorgungssystem kann ein individueller Mindestbatterieladestand eingestellt werden.

So kann einfach die Sicherheit des Versorgungssystems erhöht werden.

Vorzugsweise meldet die Steuereinheit den Zustand der Batterie und die maximal möglichen Leistungswerte für Laden respektive Entladen der Batterie an die Steuerzentrale.

Das ermöglicht eine einfache Regelung von Lasten in einem Stromnetz.

Vorzugsweise wird die Kommunikation zwischen Steuerzentrale und Steuereinheit überwacht und insbesondere wird bei Ausfall der Kommunikation keine Einspeisung von Energie aus der Energiespeichervorrichtung in das Stromnetz vorgenommen.

Es ist möglich, dass die Steuereinheit überwacht, ob die Kommunikation mit der Steuerzentrale ordnungsgemäss stattfindet. Dies kann beispielsweise erfolgen, indem die Steuereinheit in regelmässigen Abständen (z.B. 15 s oder 30 s) ein Datum (z.B. eine Ziffer) an die Steuerzentrale schickt und die Steuerzentrale das Datum zurück an die Steuereinheit sendet. Die Steuereinheit vergleicht dann das gesendete und empfangene Datum. Stimmen die Daten überein, findet die Kommunikation ordnungsgemäss statt. Stimmen die Daten nicht überein, ist die Kommunikation gestört und die Versorgungseinheit schaltet auf «Standalone» um. In diesem Zustand wird kein elektrischer Strom aus dem Stromnetzwerk bezogen oder in dieses eingespeist.

Vorzugsweise kommuniziert die Steuerzentrale priorisierte Befehle an die Steuereinheit, welche die Befehle der Steuereinheit überschreiben, wobei insbesondere der Ladevorgang von elektrisch betriebenen Fahrzeugen an der Ladestation des mindestens einen Versorgungssystems auf Grund dieser priorisierten Befehle gedrosselt oder unterbrochen werden kann.

Wenn das Versorgungssystem nicht zur Verfügung steht, beispielsweise aufgrund eines tiefen Ladestands der Energiespeichervorrichtung oder aufgrund eines Brandes, wird dies an die Steuerzentrale gemeldet. In diesem Zustand nimmt das Versorgungssystem keine priorisierten Befehle entgegen.

Die Erfindung wird in den folgenden Figuren detaillierter beschrieben. Die Figuren zeigen:
Figur 1: Eine Seitenansicht auf ein Versorgungssystem,
Figur 2: einen Querschnitt durch ein Versorgungssystem nach Figur 1,
Figur 3: eine Seitenansicht eines Versorgungssystems nach Figur 1,
Figur 4: eine schematische Darstellung eines Standalone-Betriebs,
Figur 5: eine schematische Darstellung eines Betriebs mit übergeordnetem Energiemanagement.

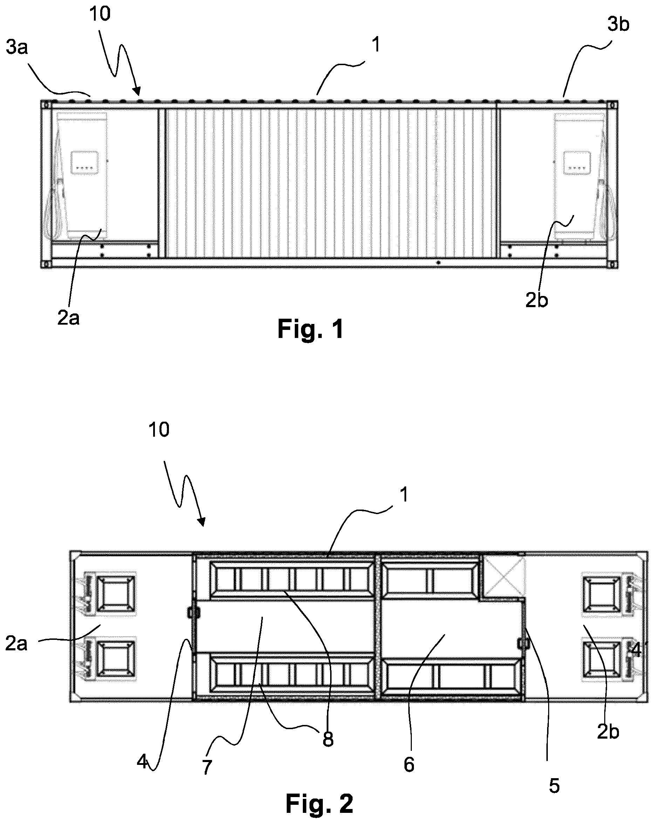

Figur 1 zeigt eine Seitenansicht auf ein Versorgungssystem 10. Das Versorgungssystem 10 umfasst einen Container 1 an dessen ersten Ende 3a einen ersten Ladebereich 2a und an dessen zweiten Ende 3b einen zweiten Ladebereich 2b angeordnet ist. Die Ladebereiche 2a und 2b werden hauptsächlich von einer Energiespeichervorrichtung (nicht gezeigt) im mittleren Bereich des Containers 1 gespeist.

Das Versorgungssystem 10 ist dazu ausgebildet, Energie zu speichern und elektrische Fahrzeuge zu laden. Dazu ist es über eine Wandlungsvorrichtung mit dem Stromnetz verbindbar.

Unter elektrischen Fahrzeugen sind hier PKWs und LKWs zu verstehen. Die elektrisch betriebenen Fahrzeuge können auch Baufahrzeuge sowie Omnibusse sein. Es ist auch möglich, dass das Versorgungssystem Baumaschinen auflädt.

Das Versorgungssystem 10 ist einfach zu transportieren und daher sehr flexibel positionierbar. Dazu sind alle Komponenten derart fixiert, dass durch den Transport keine Schäden entstehen können.

Das Versorgungssystem 10 kann sowohl unabhängig als auch im Stromversorgungsnetz integriert gesteuert werden.

Wird das Versorgungssystem 10 unabhängig gesteuert, bezieht das Versorgungssystem 10 nur über eine feste oder lösbare Verbindung Energie aus dem Stromnetz. Die Steuerung des Versorgungssystems 10 ist derart ausgebildet, dass das Aufladen der Energiespeichervorrichtung zeitlich und/oder nach Bedarf vorgenommen wird. Das erlaubt es, das Versorgungssystem kostengünstig und effizient aufzuladen.

Wird das Versorgungssystem 10 in das Stromversorgungsnetz integriert, erhält die Steuerung des Versorgungssystems 10 zusätzlich zur Versorgung mit Energie von einer Steuerzentrale Befehle zum Aufladen und/oder Entladen der Energiespeichervorrichtung, abhängig vom Bedarf des gesamten Stromversorgungsnetzes. So können Lastspitzen in dem Stromversorgungsnetz durch die Einspeisung von Energie aus der Energiespeichervorrichtung in das Stromnetz ausgeglichen werden. Ausserdem kann Energie aus dem Stromnetz bezogen werden, um bei geringer Last des Netzes die Energiespeichervorrichtung aufzuladen.

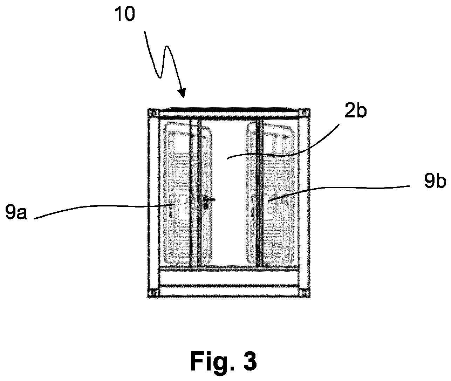

Das Versorgungssystem 10 lädt also mit Energie aus dem Stromnetz die Energiespeichervorrichtung auf. Ein elektrisch betriebenes Fahrzeug fährt zu einem Ladebereich, um dort aufzuladen. Es wird mit einer Ladestation 9a, 9b (vgl. Figur 3) verbunden. Die Steuerung des Versorgungssystems 10 schaltet auf Laden. Während dem Aufladen kann die Energie aus der Energiespeicherung an die Ladestation geleitet und die Energiespeichervorrichtung nicht mit Energie aus dem Stromnetz aufgeladen werden.

Es ist auch möglich, die Ladestation mit Energie aus dem Stromnetzwerk und aus der Energiespeichervorrichtung zu versorgen. Dadurch kann die Leistung der Ladestation erhöht werden, da die Leistung bei Netzbetrieb durch die maximale Leistung des entsprechenden Steckers begrenzt wird.

Figur 2 zeigt einen Querschnitt durch ein Versorgungssystem 10 nach Figur 1. Im mittleren Bereich des Containers 1, dem Technikabteil, sind ein Steuerungsabteil 6 und ein Energiespeicherabteil 7 angeordnet, die von den Ladebereichen 2a und 2b aus über Türen 4 resp. 5 betreten werden können.

Im Energiespeicherabteil 7 sind mindestens zwei Batterien 8 angeordnet. Die Batterien 8 sind in Batterieracks angeordnet.

Das Energiespeicherabteil 7 ist klimatisiert. Das Energiespeicherabteil 7 und das Steuerungsabteil 6 können auch klimatisiert und belüftet sein.

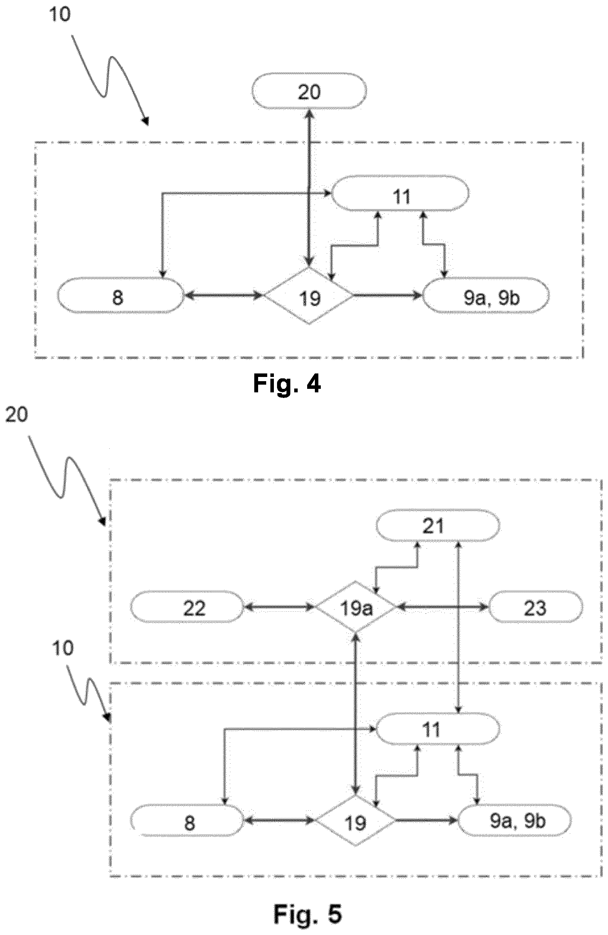

Das Steuerungsabteil 6 ist direkt neben dem Energiespeicherabteil 7 angeordnet. Im Steuerungsabteil ist eine Steuereinheit angeordnet, welche die Batterien, die Ladestationen und den Energiefluss steuert (vgl. Figuren 4 und 5). Die Steuereinheit umfasst ein Bediengerät, welches Interaktionen mit einem Benutzer erlaubt.

Zusätzlich ist im Steuerungsabteil 6 eine Wandlungsvorrichtung angeordnet, welche zum Speichern den AC-Strom in DC-Strom umwandelt und den DC-Strom in AC-Strom umwandelt zur Versorgung der Ladestationen (vgl. Figur 3) und zur Einspeisung in ein Stromnetzwerk.

Figur 3 zeigt eine weitere Seitenansicht des Versorgungssystems 10. Zu sehen ist der Ladebereich 2b aus Figur 1. Die Ladebereich 2b umfasst zwei Ladestationen 9a und 9b. Die Ladebereiche 2a und 2b sind in ihrer Ausstattung identisch.

Figur 4 zeigt eine schematische Darstellung eines Stand-alone-Betriebes eines Versorgungssystems 10.

Das Versorgungssystem 10 bezieht Energie aus einem Stromnetz 20. Es wird unabhängig vom Stromnetz 20 gesteuert: Die Steuereinheit 11 des Versorgungssystems 10 steuert die Energiespeichervorrichtung 8 und Ladestationen 9a und 9b und den Energiefluss 19 zwischen Stromnetz 20, Batterien 8 und Ladestationen 2a und 2b.

Das Versorgungssystem 10 wird über einen CEE-Netzanschluss mit beschränkter Anschlussleistung angeschlossen. Ein Rückspeisen von Energie in das Stromnetz ist in diesem Betriebsmodus unterbunden. Die Steuereinheit 11 regelt den Energiefluss folglich so, dass auf keiner Phase Strom aus dem Versorgungssystem 10 in das Stromnetz fliesst.

Zu Zeiten ohne aktiven Ladevorgang an einer der Ladestationen sorgt die Steuereinheit für genügenden Ladezustand der Energiespeichervorrichtung 8. Dabei wird die Energiespeichervorrichtung 8 mit einem einstellbaren Leistungswert nachgeladen. Die für den Ladevorgang der Energiespeichervorrichtung 8 maximalen Leistungswerte können an einer Bedienung in einem Steuerabteil (s. Figur 2) zeitbasiert vorgegeben werden. Damit kann der Energiebezug des Versorgungssystems 10 beispielsweise auf Hoch- und Niedertarif abgestimmt werden.

Wird ein Fahrzeug zwecks Ladevorgang angeschlossen, dann fährt die Steuereinheit 11 im ersten Schritt das Nachladen der Energiespeichervorrichtung 8 herunter. Anschliessend wird der Ladevorgang mit minimaler Leistung gemäss Vorgabe des Fahrzeuges gestartet. Sobald ein Energiebezug ab Ladestation 9a, 9b erfolgt, wird die Leistung der Energiespeichervorrichtung 8 und auch die Leistung der Ladestation 9a, 9b parallel hochgefahren. Während des gesamten Ladevorganges kann eine einstellbare Leistung aus dem Stromnetz 20 bezogen werden. Es ist auch möglich, dass während des Ladevorgangs keine Leistung aus dem Stromnetz 20 bezogen wird.

Figur 5 zeigt eine schematische Darstellung eines integrierten Betriebs eines Versorgungssystems 10. Die Steuereinheit 11 kommuniziert mit einer Steuerzentrale 21 des Stromnetzes 20. Die Steuerzentrale 21 gibt Befehle an die Steuereinheit 11, und steuert den Energiefluss 19a des Stromnetzes 20, insbesondere den Energiefluss 19a zwischen dem Netzanschluss 22 und dem Arealnetz 23.

Bei einem integrierten Betrieb wird das Versorgungssystem 10 über einen PowerLock-Anschluss mit dem Stromnetz 20 verbunden. Es ist auch möglich, dass das Versorgungssystem 10 über CEE Steckdosen beim integrierten Betrieb mit dem Stromnetz 20 verbunden wird. In diesem Betriebsmodus kann das Versorgungsystem 10 neben dem Laden von elektrisch betriebenen Fahrzeugen beispielsweise auch für ein Peak-Shaving oder zur Aufnahme von Überschussenergie aus lokaler Produktion verwendet werden. Die Steuerungszentrale 21 sorgt dafür, dass die Kenndaten im Stromnetz 20 eingehalten werden. Die Steuereinheit 11 des Versorgungssystems 10 wird für diese übergeordneten Funktionen mit entsprechenden Steuerbefehlen durch die Steuerungszentrale 21 versorgt. Das Versorgungssystem 10 führt diese Steuerbefehle aus, wenn der Zustand der Batterie 8 diese zulassen. Dazu meldet das Versorgungssystem 10 den Zustand der Batterien 8 und die maximal möglichen Leistungswerte für Laden respektive Entladen der Batterien 8 an die Steuerungszentrale 21 zurück. Ebenfalls wird die aktive Kommunikation zwischen Steuereinheit 11 und der Steuerungszentrale 21 überwacht. Bei Ausfall der Kommunikation wechselt das Versorgungssystem in den Standalone-Betrieb (vgl. Figur 4) .

Die Steuerungszentrale 21 kann seine Steuerbefehle zusätzlich priorisieren. Damit ist möglich, dass ein aktiver Ladevorgang eines Fahrzeuges gedrosselt oder unterbrochen wird. Dies beispielsweise, wenn die Steuerungszentrale 21 einen hohen Leistungsbezug anfordert und die Batterien 8 des Versorgungssystems 10 nicht beide Anforderungen parallel erfüllen kann.

## Patentansprüche

1. Versorgungssystem (10) für elektrisch betriebene Fahrzeuge umfassend eine Energiespeichervorrichtung (8), eine Steuereinheit (11), eine Wandlungsvorrichtung sowie eine Ladestation (9a,9b), wobei die Ladestation (9a,9b) durch die Energiespeichervorrichtung (8) und über die Wandlungsvorrichtung mit Energie versorgbar ist.

2. Versorgungssystem (10) nach einem der vorhergehenden Ansprüche, **dadurch gekennzeichnet, dass** die Wandlungsvorrichtung einen Wechselrichter zum Umwandeln von DC-Strom aus der Energiespeichervorrichtung (8) in AC-Strom zur Versorgung der Ladestation umfasst.

3. Versorgungssystem (10) nach einem der vorhergehenden Ansprüche **dadurch gekennzeichnet, dass** die Energiespeichervorrichtung (8), die Steuereinheit (11), die Wandlungsvorrichtung und die Ladestation in einem Container (1) mit 2.44m Breite angeordnet sind, insbesondere in einem High Cube Container (1) mit einer Höhe vom 2.9 m.

4. Versorgungssystem (10) nach einem der vorhergehenden Ansprüche, **dadurch gekennzeichnet, dass** die Energiespeichervorrichtung (8) und/oder die Steuereinheit (11) und/oder die Wandlungsvorrichtung in einem Technikabteil angeordnet sind.

5. Versorgungssystem nach Anspruch 4, **dadurch gekennzeichnet, dass** das Technikabteil ein Energiespeicherabteil (7) und ein Steuerungsabteil (6) umfasst, wobei die Energiespeichervorrichtung (8) im Energiespeicherabteil (7) und die Steuereinheit (11) sowie die Wandlungsvorrichtung im Steuerungsabteil (6) angeordnet sind, wobei das Steuerungsabteil (6) und das Energiespeicherabteil (7) insbesondere jeweils durch eine Tür (4, 5) zugänglich ist.

6. Versorgungssystem (10) nach einem der vorhergehenden Ansprüche, **dadurch gekennzeichnet, dass** das Versorgungssystem (10) eine Netzanschlussvorrichtung umfasst und insbesondere durch die Wandlungsvorrichtung AC-Strom aus dem Netz in DC-Strom umwandelbar ist.

7. Versorgungsystem (10) nach einem der vorhergehenden Ansprüche, **dadurch gekennzeichnet, dass** mindestens zwei, insbesondere vier Ladestationen (9a, 9b) ausgebildet sind, wobei die vier Ladestationen (9a, 9b) jeweils in Gruppen von zwei Ladestationen an gegenüberliegenden Enden des Versorgungssystems (10) angeordnet sind, insbesondere an gegenüberliegenden Enden beidseitig des Technikabteils angeordnet sind.

8. Verfahren zur Herstellung eines Versorgungssystems (10) gemäss einem der vorhergehenden Ansprüche, **dadurch gekennzeichnet, dass** ein Container (1), insbesondere mit 2.44m Breite, bevorzugt ein High Cube Container, mit einer Energiespeichervorrichtung (8), einer Steuereinheit (11), einer Wandlungsvorrichtung und einer Ladestation (9a, 9b) für Fahrzeuge ausgestattet wird.

9. Verfahren, insbesondere computer-implementiertes Verfahren, zum Laden eines Fahrzeuges mit einem Versorgungssystem (10) nach einem der Ansprüche 1 bis 7, **dadurch gekennzeichnet, dass** elektrische Energie aus einer Energiespeichervorrichtung (8) durch eine Wandlungsvorrichtung in AC-Strom umgewandelt wird und an eine Ladestation (9a, 9b) geleitet wird, wobei die Ladestation (9a, 9b) lösbar mit einem Fahrzeug verbunden wird und eine Batterie des Fahrzeuges auflädt.

10. Verfahren nach einem der Ansprüche 8 bis 9, **dadurch gekennzeichnet, dass** das Versorgungssystem (10) während des Ladevorgangs des Fahrzeuges nicht mit einer Energieversorgung verbunden wird.

11. Verfahren, insbesondere computer-implementiertes Verfahren, zum Zwischenspeichern von Energie in mindestens einem Versorgungssystem (10) nach einem der Ansprüche 1 bis 7, **dadurch gekennzeichnet, dass** Energie über die Netzanschlussvorrichtung über die Wandlungsvorrichtung in die Energiespeichervorrichtung (8) eingeleitet wird, insbesondere auf Anordnung einer Steuerzentrale (21) eines Stromnetzes (20).

12. Verfahren nach Anspruch 11, **dadurch gekennzeichnet, dass** die Steuerzentrale (21) die Belastung des Stromnetzes (20) und die Einspeisung von Energie in das Stromnetz (20) überwacht und auf Grund dieser Überwachung Befehle an die Steuereinheit (11) des mindestens einen Versorgungssystems (10) sendet, insbesondere gibt die Steuerzentrale (21) den Befehl, Energie zu speichern bei geringer Last und Energie in das Stromnetz (20) zu speisen bei hoher Last.

13. Verfahren nach Anspruch 12, **dadurch gekennzeichnet, dass** die Steuereinheit (11) des Versorgungssystems (20) den Ladezustand der Energiespeichervorrichtung (8) überwacht und insbesondere Befehle der Steuerzentrale (21) nur durchführt, falls der Ladezustand der Energiespeichervorrichtung (8) dies zulässt.

14. Verfahren nach einem der Ansprüche 11 - 13, **dadurch gekennzeichnet, dass** die Steuereinheit (11) den Zustand der Energiespeichereinheit (8) und die maximal möglichen Leistungswerte für Laden und/oder Entladen der Energiespeichervorrichtung (8) an die Steuerzentrale (21) meldet.

15. Verfahren nach einem der Ansprüche 11 - 14, **dadurch gekennzeichnet, dass** die Kommunikation zwischen Steuerzentrale (21) und Steuereinheit (11) überwacht wird und insbesondere bei Ausfall der Kommunikation keine Einspeisung von Energie aus der Energiespeichervorrichtung (8) in das Stromnetz (20) vorgenommen wird.
